# EUROPÄISCHE PATENTSCHRIFT

(11) **EP 0 876 600 B1**
(45) Veröffentlichungstag und Bekanntmachung des Hinweises auf die Patenterteilung: **05.06.2002**
(21) Anmeldenummer: 97900185.6
(22) Anmeldetag: 17.01.1997
(51) Int. Cl.: G01N 21/89, D03J 1/00, D04B 35/20

(54) **VORRICHTUNG ZUR AUTOMATISCHEN ÜBERWACHUNG VON TEXTILEN FLÄCHENGEBILDEN**
DEVICE FOR AUTOMATICALLY MONITORING TEXTILE FLAT STRUCTURES
DISPOSITIF DE CONTROLE AUTOMATIQUE DE STRUCTURES TEXTILES PLANES

(30) Priorität: 26.01.1996 CH 20996
(43) Veröffentlichungstag der Anmeldung: 11.11.1998
(73) Patentinhaber: ZELLWEGER LUWA AG, 8610 Uster (CH)
(72) Erfinder: LEUENBERGER, Rolf, CH-8330 Pfäffikon (CH); UHLMANN, Jürg, CH-8500 Frauenfeld (CH)
(74) Vertreter: Ellenberger, Maurice
(86) Internationale Anmeldenummer: CH9700014
(87) Internationale Veröffentlichungsnummer: WO9727471

(56) Entgegenhaltungen:
- EP-A- 0 162 134
- EP-A- 0 530 492
- WO-A-92/08967
- DE-A- 3 529 058
- US-A- 4 539 561

## Beschreibung

Die Erfindung betrifft eine Vorrichtung zur Überwachung von textilen Flächengebilden, insbesondere Gewebebahnen, mit einer elektrooptischen Einrichtung zum fortlaufenden Abtasten eines Flächengebildes.

Neben der heute noch immer praktizierten rein visuellen Kontrolle von textilen Flächengebilden durch das menschliche Auge gibt es auch Vorrichtungen für eine automatisierte Überwachung. Eine solche automatisierte Überwachung ist aus der EP-A-162 134 bekannt. Bei dieser bekannten Vorrichtung wird die Gewebebahn auf der Webmaschine durch einen quer zur Gewebebahn verschiebbaren Abtastkopf zeilenförmig abgetastet, wobei ein Signal entsteht, das eine Beziehung zur Oberfläche des Gewebes aufweist. Dieses Signal wird anschliessend verarbeitet und mit Vorgaben verglichen, so dass ein möglicher Fehler auf dem Gewebe aus dem Signal erkannt werden kann. Solche Fehler lösen auf der Webmaschine einen Alarm aus oder führen direkt zur Stillsetzung der Webmaschine. So erhält das Bedienungspersonal eine Aufforderung sich gezielt der betroffenen Webmaschine zu widmen und die Fehlerursache möglicherweise zu beheben.

Verschiedene weitere Möglichkeiten zur Prüfung von Geweben sind aus der nachfolgend aufgeführten Literatur bekannt

Meilland Textilberichte 1/1993, Dr. Bertram Nickolay, Dipl. Ing. Karlheinz Schicktanz, Dr. Harald Schmalfuss, "Automatische Warenschau - Utopie oder mögliche Realität?"

Computer Vision and Image Understanding Vol. 61, No. 2, March, pp. 231-262, 1995, Timothy S. Newman and Anil K. Jain, "A Survey of Automated Visual Inspection"

Textile Research Journal 65(4), 196-202, 1995, S. Sette, L. Boullart and P. Kiekens, "Self-Organizing Neural Nets: A New Approach to Quality in Textiles"

Helsinki University of Technology, November 1990, An Visa, "Texture Classification and Segmentation Based on Neural Network Methods"

Textile Research Journal 65(3), 123-130, 1995, I-Shou Tsai, Chung-Hua Lin and Jeng-Jong Lin, "Applying an Artificial Neural Network to Pattern Recognition in Fabric Defects"

Bekannte Warenschauanlagen, die das Gewebe automatisch prüfen sind zwar leistungsfähig aber auch teuer. So kann eine einzige Warenschauanlage den Ausstoss von mehreren Dutzend Webmaschinen überprüfen. In einfacheren und billigeren Anlagen wird aber immer noch die Kontrolle durch das menschliche Auge durchgeführt.

Ein Nachteil solcher bekannter Warenschauanlagen ist darin zu sehen, dass sie sich, falls sie automatisch ohne visuelle Kontrolle arbeiten, finanziell nur für eine grössere Anzahl Webmaschinen lohnen. Zur Überwachung der Produktion von wenigen Webmaschinen sind solche Warenschauanlagen zu teuer. Andererseits können bei der Kontrolle durch das menschliche Auge mit solchen Anlagen nur etwa 70% der Fehler auf einer Gewebebahn gefunden werden. Insbesondere werden schwach ausgeprägte Fehler durch das Auge nicht erkannt Zur Kontrolle von bunten Geweben sind bekannte Warenschauanlagen kaum geeignet.

Bei der bekannten automatischen Überwachung von Geweben auf der Webmaschine können Art und Folgen des Fehlers erst durch die Bedienperson an der Maschine direkt erkannt werden. So verlangt auch der Entscheid über die zu treffenden Massnahmen die Anwesenheit der Bedienperson an der Webmaschine. Wenn man bedenkt, dass eine Bedienperson 20 bis 30 Webmaschinen beaufsichtigen und betreuen muss, so wird klar, dass bei Auftreten eines Fehlers auf einer der Webmaschinen einige Zeit vergehen kann bis der Fehler erkannt, eventuell behoben ist und bis die Webmaschine den Betrieb wieder aufnehmen kann. Zu lange dauernde Stillstände einer Webmaschine führen aber wiederum zu Fehlern im Gewebe und zu Verlusten an Produktivität. Damit wird klar, dass die automatische Fehlererkennung wie die Fehlererkennung durch das Auge problematisch sind. Deshalb haben sich solche Systeme bisher auch nicht in grossem Umfang durchgesetzt.

Aus der DE 35 29 058 ist eine Vorrichtung zur automatischen Überwachung von textilen Flächengebilden bekannt, bei der jede Webmaschine eine Abtasteinrichtung aufweist, die zusammen an eine zentrale Auswerteeinrichtung angeschlossen sind.

Aus der US-4,539,561 ist ein Verfahren und eine Vorrichtung zum Überwachen einer Materialoberfläche bekannt. Dabei wird die Materialoberfläche durch eine Kamera überwacht, die ein Videosignal erzeugt. Dieses wird mit Schwellwerten verglichen, so dass das Videosignal nur dann an eine Speichereinrichtung weitergegeben wird, wenn diese Schwellwerte überoder unterschritten sind.

Die Erfindung wie sie in den Patentansprüchen gekennzeichnet ist, löst nun die Aufgabe eine Vorrichtung zu schaffen, die eine vollständigere, differenziertere und raschere Erkennung von Fehlern auf textilen Flächengebilden erlaubt die sich auch für die Überwachung einer geringen Anzahl Webmaschinen eignet.

Die Aufgabe wird dadurch gelöst, dass jede Webmaschine eine elektrooptische Einrichtung zum fortlaufenden Abtasten eines Gewebes aufweist, somit eine Gruppe elektrooptischer Einrichtungen vorgesehen ist, in der jede elektrooptische Einrichtung über eine Einrichtung zur Datenübertragung mit einer zentralen Auswerteeinheit verbunden ist. Zudem ist jeder Webmaschine je eine weitere Auswerteeinheit zugeordnet, welche zur Durchführung einer Vorselektion im Hinblick auf mögliche Fehler im Flächengebilde ausgebildet ist,

Die durch die Erfindung erreichten weiteren Vorteile sind darin zu sehen, dass die Qualitätsüberwachung und die Maschinenbedienung für die Webmaschine voneinander getrennt werden können. Damit kann eine Beurteilung der Fehlerarten für alle Webmaschinen an einer übergeordneten Stelle beispielsweise durch einen Fachmann wie den Webereimeister durchgeführt werden. Die Fehler die auf einer Webmaschine erkannt werden, können sofort beurteilt und je nach Resultat der Beurteilung kann die Webmaschine sehr rasch nach dem Auftreten des Fehlers stillgesetzt werden. Treten verschiedene Fehler an mehreren Maschinen gleichzeitig oder kurz nacheinander auf, so können die Fehler entsprechend des zu erwartenden oder bereits angerichteten Schadens gewichtet und in der richtigen zeitlichen Reihenfolge behandelt werden oder es können sonstige der Situation entsprechende Massnahmen präventiver oder anderer Art ergriffen werden. Auf die gleiche Art und Weise und mit der gleichen erfindungsgemässen Vorrichtung können auch Gewirke oder andere textile Flächengebilde wie Strickwaren oder Nonwovens überwacht werden, die nicht auf einer Webmaschine durch Weben sondern durch ein entsprechendes Produktionsverfahren hergestellt werden.

Im folgenden wird die Erfindung anhand von Beispielen und mit Bezug auf die beiliegenden Figuren näher erläutert. Es zeigt
Figur 1 eine vereinfachte Darstellung der erfindungsgemässen Vorrichtung,
Figur 2 ein Schema eines Teils der Vorrichtung und
Figur 3 eine weitere Ausführung der Vorrichtung gemäss Fig. 1.

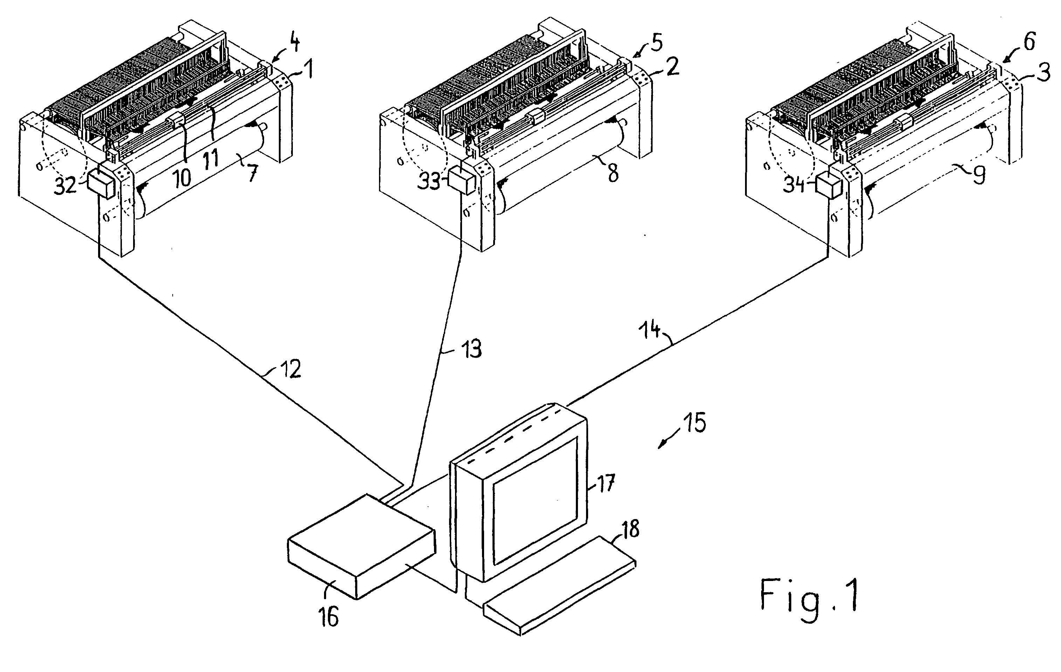

Fig. 1 zeigt eine erfindungsgemässe Vorrichtung für drei an sich bekannte Webmaschinen 1, 2 und 3. Jede Webmaschine 1, 2, 3 ist mit einer elektrooptischen Einrichtung 4, 5, 6 zum fortlaufenden Abtasten eines textilen Flächengebildes wie hier eines Gewebes 7, 8, 9 ausgebildet und angeordnet. Jede elektrooptische Einrichtung 4, 5, 6 besteht beispielsweise aus einem Sensor 10 und einer Lagerung 11. Der Sensor 10 kann dabei auf seiner Lagerung 11 feststehend angeordnet sein und dabei das Gewebe 7, 8, 9 in seiner ganzen Breite erfassen, oder er kann auf seiner Lagerung 11 beweglich angeordnet und angetrieben sein und quer zur Längsrichtung des Gewebes die ganze Breite des Gewebes mit einer Bewegung überstreichen. Auch der an sich feststehend vorgesehene Sensor 10 kann beweglich aber nicht angetrieben und so gelagert sein, dass er auf die Breite des gerade gewobenen Gewebes einstellbar ist, so dass er über dem Gewebe zentriert werden kann. Der Sensor 10 kann einen punktförmigen, einen linienförmigen oder einen flächenförmigen Teil oder Abschnitt des Flächengebildes oder Gewebes 7, 8, 9 erfassen, wobei natürlich nur ein solcher Sensor feststehend angeordnet sein kann, der einen flächen- oder linienförmigen Teil des Gewebes oder möglichst das ganze Gewebe erfasst. Als Sensoren 10 kommen alle bekannten Sensoren in Frage, also Fotozellen, Laserscanner, Kameras usw. Allen Sensoren zugeordnet ist, falls notwendig, eine erste Auswertungseinheit, die aus den Signalen des Sensors also aus Zeilen oder Bildpunkten ein Bild oder ein Bildsignal erzeugt. In jedem Falle ist damit die an sich bekannte und deshalb hier nicht näher dargestellte elektrooptische Einrichtung 4, 5, 6 in der Lage ein Bild eines Teils des Gewebes 7, 8, 9 an eine Einrichtung zur Datenübertragung abzugeben, die hier aus je einer Leitung oder einem Bus 12, 13, 14 besteht. Jeder Bus 12, 13, 14 ist auch an eine zentrale Auswerteeinheit 15 angeschlossen, die hier neben einem Prozessor 16 auch eine Datenausgabe 17 und eine Dateneingabe 18 aufweist. Die zentrale Auswerteeinheit 15 weist an sich bekannte Mittel wie Speicher auf, um die Bildsignale als Bilder in der Datenausgabe 17 auch auf Abruf erscheinen zu lassen und um eine Auswahl aus den zur Verfügung stehenden Bildern von jeder Webmaschine 1, 2, 3 zu treffen. Die Webmaschinen 1, 2, 3 können auch hier nicht dargestellte aber an sich bekannte Beleuchtungseinrichtungen für das Gewebe 7, 8, 9 aufweisen.

Die Wirkungsweise der vorausgehend beschriebenen Vorrichtung ist wie folgt: Die elektrooptischen Einrichtungen 4, 5, 6 liefern über die Leitungen 12, 13, 14 laufend Daten an den Prozessor 16, der diese, falls nötig, zu Bilddaten aufbereitet, die als Bilder von den Geweben 7, 8, 9 auf der als Bildschirm ausgebildeten Datenausgabe 17 erscheinen und über die Dateneingabe 18 ausgewählt werden können. Je nach Anzahl beteiligter Webmaschinen und je nach Grösse des erfassten Teils der Gewebe 7, 8, 9 kann eine Bedienperson die Gewebe auf der Datenausgabe auf mehreren Webmaschinen gleichzeitig von Auge überwachen.

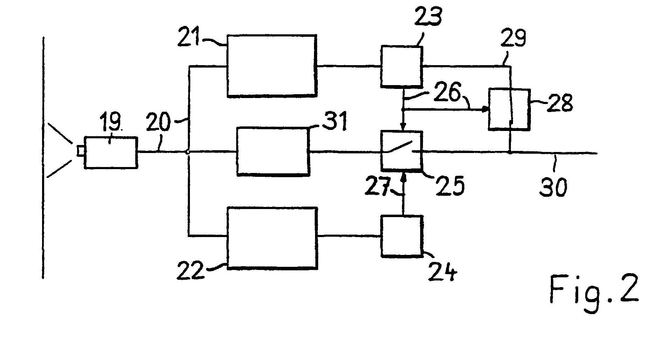

Gemäss Fig.1 ist jeder Webmaschine 1, 2, 3 eine eigene Auswerteeinheit oder ein eigener Prozessor 32, 33, 34 zugeordnet, der eine erste Auswertung der Signale aus der elektrooptischen Einrichtung im Hinblick auf mögliche Fehler im Gewebe durchführen kann. Diese Prozessoren können eine Auswertung im Sinne der in Fig. 2 gezeigten Anordnung durchführen oder leistungsfähigere und aufwendigere Verfahren durchführen wie dies vorausgehend für die Vorselektion oder die eigentliche automatische Erkennung von Gewebefehlem beschrieben wurde.

Eine einfache Vorselektion der Bilddaten ist mit der Vorrichtung gemäss Fig. 2 möglich. Dabei werden Bilddaten, die über die Leitung 20 in das Hochpassfilter 21 und das Tiefpassfilter 22 gelangen dort gefiltert. Das Hochpassfilter 21 filtert dabei je nach Auslegung Signale mit höherer Frequenz aus und gibt, ein Signal an den Signaldetektor 23 ab, in dem gewisse Eigenschaften verstärkt sind, die man hervorheben möchte. Der Signaldetektor 23, der über die Leitungen 26 und 29 die Schaltelemente 25 und 28 betätigt, wirkt beispielsweise als Schwellwertdetektor. Das bedeutet, dass beispielsweise das Schaltelement 25 dann geschlossen wind, wenn das Signal aus dem Hochpassfilter 21 einen gesetzten Schwellwert überschreitet. So können ungefilterte Bilddaten selektiv dann über die Leitung 30 zur Betrachtung ausgegeben werden, wenn das Signal eine Besonderheit aufweist. Der Signaldetektor 23 kann wahlweise zusätzlich ein Schaltetement 28 über die Leitung 26 ansteuern, so dass beispielsweise eine Fehlerinformation oder eine besondere Kennzeichnung in die Bilddaten in Leitung 30 eingeblendet werden. Nach Durchgang einer Datenmenge, die ein ganzes Bild ergibt, gehen die Schaltelemente 25, 28 beispielsweise automatisch in die gezeigte Stellung zurück.

In entsprechender Weise werden besonders niederfrequente Signalteile im Tiefpassfilter 22 erfasst und herausragende Signalteile im Signaldetektor 24 delektiert, wodurch mindestens das Schaltelement 25 geschlossen wird. Sind die Filter 21, 22 digital arbeitend vorgesehen, so ist eine Signalverzögerungsschaltung 31 vorzusehen, die das letztlich zu betrachtende Bild und damit auch die Bilddaten mindestens solange verzögert, wie dies auch in den Filtern 21, 22 geschieht. Auf diese Weise erhält der Betrachter an der Datenausgabe 17 nur noch solche Bilder, die Gewebe zeigen, bei denen ein Verdacht auf Fehler besteht. Die Filter 21, 22 und die Signaldetektoren 23, 24 sind dabei so auszulegen, dass das System überempfindlich reagiert, so dass bereits geringe Abweichungen im Gewebe eine Bildübertragung in Leitung 30 auslösen. Die definitive Beurteilung des eventuellen Fehlers erfolgt dann durch die Bedienperson. Zur Vereinfachung ist es auch möglich nur eines der beiden Filter 21, 22 vorzusehen. Diese Anordnung gemäss Fig. 2 lässt sich sinngemäss auch durch eine entsprechende Programmierung des Prozessors 16 erreichen.

Zur Vorselektion sind aber auch andere aus anderen Gebieten bekannte Verfahren der Bildverarbeitung anwendbar. Darunter fallen beispielsweise sogenannte Gradientenverfahren, die Texturanalyse oder die Schwellwertmethode. Alle sind mit bekannter digitaler Signalverarbeitung in Mikroprozessoren durchführbar. Während die Schwellwertanalyse zwar sehr einfach aber wenig zuverlässig ist, arbeitet die Texturanalyse sicher, ist aber mit grossem Aufwand verbunden. Solche Verfahren können aber den Rahmen der Vorselektion sprengen und sogar für eine Fehlererkennung genutzt werden.

Zur Fehlererkennung kann in der Auswerteeinheit 15 auch ein neuronales Netzwerk realisiert werden, dem in einer Lemphase bekannte Muster fehlerfreier Gewebe und entsprechender fehlerbehafteter Gewebe vorgelegt werden, in dem diese durch eine elektrooptische Einrichtung 4, 5, 6 bildmässig erfasst werden. Die erwartete Fehlerangabe wird dabei über die Dateneingabe 18 eingegeben. Im Betrieb werden dann fehlerbehaftete Bilder automatisch an die Datenausgabe 17 ausgegeben. Statt auf ganze Bilder können die neuronalen Netze auch auf bestimmte Parameter und Kombinationen davon ansprechen. solche Parameter sind beispielsweise die Schussoder Kettfadendichte, die Bindungsart, die Gamdicke usw.

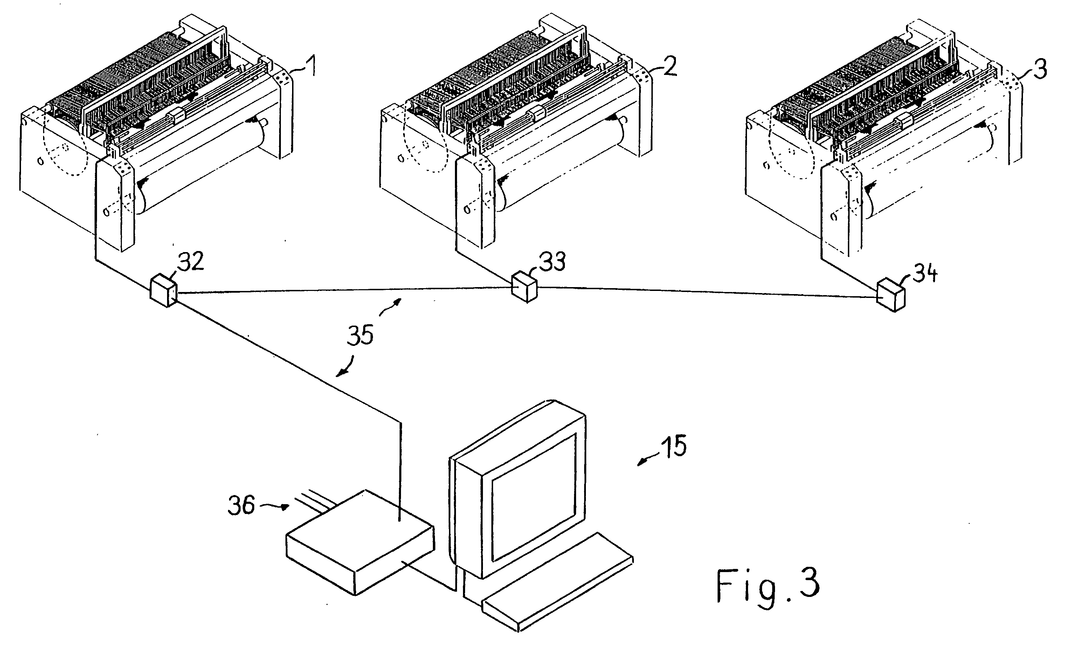

Fig. 3 zeigt wiederum eine Ausführung mit Prozessoren 32, 33, 34 gemäss Fig. 1 bei der die Einrichtung zur Datenübertragung die Prozessoren nicht parallel wie gemäss Fig. 1 sondern in Serie schaltet. Damit ist es besonders einfach, die zentrale Auswerteeinheit 15 über ein Bussystem 35 mit den Webmaschinen 1, 2, 3 für die Belange der Fehlererkennung in den Geweben zu verbinden. Dies ist wegen der in den Prozessoren 32, 33, 34 erfolgten Datenreduktion problemlos möglich. Vorzugsweise sind die weiteren Auswerteeinheiten oder Prozessoren 32, 33, 34 direkt auf der Webmschine 1, 2, 3 befestigt, wie dies in Fig.1 gezeigt ist.

Vorzugsweise enthält die zentrale Auswerteeinheit 15 eine Einrichtung zur Vorselektion des, über jeden Bus 12, 13, 14 eintreffenden Bildmaterials. Diese Einrichtung ist in einer einfachen Form als Filter ausgebildet. Ein solches Filter kann analoger oder digitaler Bauart sein und beispielsweise eine Hochpasscharakteristik aufweisen, so dass die überwiegend vorkommenden Signalteile ausgefiltert und Signalteile mit höherer Frequenz durchgelassen werden. Solche Signalteile weisen auf einen Fehler hin. Über die Dateneingabe 18 können auch Signale an die Prozessoren 32, 33, 34 oder an die elektrooptischen Einrichtungen 4, 5, 6 ausgegeben werden, beispielsweise für die Veränderung von Parametern für die Vorselektion von Daten oder einfach zum Abstellen der Webmaschine.

Sind Fehler auf einem Gewebe über die zentrale Auswerteeinheit 15 in irgend einer der genannten Formen erkannt worden, so muss der Fehler behoben oder zumindest beseitigt werden. Dazu muss er eventuell markiert werden. Zu diesem Zweck kann die elektrooptische Einrichtung 4, 5, 6 eine Markiereinrichtung aufweisen, die ebenfalls von der zentralen Auswerteinheit 15 über die Einrichtung zu Datenübertragung 12, 13, 14, 35 angesteuert werden kann. Eine andere Möglichkeit besteht darin, der zentralen Auswerteeinheit 15 über Eingänge 36 die aktuelle Schusszahl anzugeben, die bekannterweise laufend in der Webmaschine ermittelt wird. Damit ist neben dem Vorhandensein eines Fehler auch seine Lage auf dem Gewebe mindestens näherungsweise bekannt und in der zentralen Auswerteeinheit 15 erfassbar.

## Patentansprüche

1. Vorrichtung zur Überwachung von textilen Flächengebilden, insbesondere Gewebebahnen, mit mehreren elektrooptischen Einrichtungen (4, 5, 6), zum fortlaufenden Abtasten je eines Flächengebildes (7, 8, 9), wobei jede Einrichtung einer Webmaschine (1, 2, 3) zugeordnet und über eine Einrichtung zur Datenübertragung (12, 13, 14) mit einer zentralen Auswerteeinheit (15) verbunden ist, **gekennzeichnet durch** je eine weitere Auswerteeinheit (32, 33, 34), welche jeder Webmaschine (1, 2, 3) zugeordnet und zur Durchführung einer Vorselektion im Hinblick auf mögliche Fehler im Flächengebilde ausgebildet ist.

2. Vorrichtung nach Anspruch 1, **dadurch gekennzeichnet, dass** die elektrooptische Einrichtung quer zur Längsrichtung des Flächengebildes bewegbar angeordnet ist.

3. Vorrichtung nach Anspruch 1, **dadurch gekennzeichnet, dass** die zentrale Auswerteeinheit Speicher zur Bildspeicherung aufweist.

4. Vorrichtung nach Anspruch 1, **dadurch gekennzeichnet, dass** die zentrale Auswerteeinheit (15) eine als Bildschirm ausgebildete Datenausgabe (17) aufweist, mit der Bilder von Geweben visuell beurteilt werden können.

5. Vorrichtung nach Anspruch 1, **dadurch gekennzeichnet, dass** die zentrale Auswerteeinheit (15) Filter (21, 22) zur Filterung und Selektion von Bilddaten aufweist.

6. Vorrichtung nach Anspruch 1, **dadurch gekennzeichnet, dass** die Einrichtung zur Datenübertragung und die zentrale Auswerteeinheit (15) zur Ausgabe von Signalen an die Webmaschine ausgebildet sind.

7. Vorrichtung nach Anspruch 1, **dadurch gekennzeichnet, dass** die elektrooptische Einrichtung feststehend angeordnet ist.

## Claims

1. Facility for the monitoring of textile fabrics, particularly lengths of woven fabric, with several electro-optical devices (4, 5, 6) for the continuous scanning of a fabric (7, 8, 9) in each case, each device being assigned to a loom (1, 2, 3) and connected to a central evaluating unit (15) via a device for the transfer of data (12, 13, 14), **characterized by** a further evaluating unit (32, 33, 34) in each case which is assigned to each loom (1, 2, 3) and is designed for effecting a preselection in respect of possible faults in the fabric.

2. Facility according to Claim 1, **characterized in that** the electro-optical device is disposed so that it is capable of moving transversely relative to the longitudinal direction of the fabric.

3. Facility according to Claim 1, **characterized in that** the central-evaluating unit has memories for the storage of images.

4. Facility according to Claim 1, **characterized in that** the central evaluating unit (15) has a data output device (17), in the form of a monitor, by means of which images of woven fabrics can be visually evaluated.

5. Facility according to Claim 1, **characterized in that** the central evaluating unit (15) has filters (21, 22) for the filtering and selection of image data.

6. Facility according to Claim 1, **characterized in that** the device for the transfer of data and the central evaluating unit (15) are designed for the output of signals to the loom.

7. Facility according to Claim 1, **characterized in that** the electro-optical device is disposed in a fixed manner.

## Revendications

1. Dispositif de contrôle de structures textiles planes, notamment de bandes de tissu, avec plusieurs installations électro-optiques (4, 5, 6), pour le balayage continu respectivement d'une structure textile (7, 8, 9), où chaque installation est associée à un métier à tisser (1, 2, 3) et est reliée par une installation de transmission de données (12, 13, 14) à une unité d'évaluation centrale (15), **caractérisé par** respectivement une unité d'évaluation supplémentaire (32, 33, 34) qui est associée à chaque métier à tisser (1, 2, 3) et qui est réalisée pour effectuer une sélection préalable eu égard à d'éventuels défauts dans la structure textile.

2. Dispositif selon la revendication 1, **caractérisé en ce que** l'installation électro-optique est disposée d'une manière déplaçable transversalement à la direction longitudinale de la structure plane.

3. Dispositif selon la revendication 1, **caractérisé en ce que** l'unité d'évaluation centrale présente des mémoires pour le stockages d'images.

4. Dispositif selon la revendication 1, **caractérisé en ce que** l'unité d'évaluation centrale (15) présente une sortie de données (17) réalisée comme écran par laquelle des images de tissus peuvent être appréciées visuellement.

5. Dispositif selon la revendication 1, **caractérisé en ce que** l'unité d'évaluation centrale (15) présente des filtres (21, 22) pour le filtrage et la sélection de données d'images.

6. Dispositif selon la revendication 1, **caractérisé en ce que** l'installation pour la transmission des données et l'unité d'évaluation centrale (15) sont réalisées pour émettre des signaux au métier à tisser.

7. Dispositif selon la revendication 1, **caractérisé en ce que** l'installation électro-optique est disposée d'une manière fixe.
